# EUROPEAN PATENT SPECIFICATION

(11) **EP 1 142 276 B1**
(45) Date of publication and mention of the grant of the patent: **04.05.2005**
(21) Application number: 99966304.0
(22) Date of filing: 15.12.1999
(51) Int. Cl.: H04M 1/725, H04N 5/45

(54) **TELEVISION REMOTE CONTROL SYSTEM WITH A PICTURE-OUTSIDE-PICTURE DISPLAY**
TV-FERNBEDIENUNGSTEUERUNGSSYSTEM MIT BILD-AUSSERHALB-BILD-ANZEIGE
SYSTEME DE TELECOMMANDE DE TELEVISEUR A AFFICHAGE IMAGE HORS L'IMAGE

(30) Priority: 04.01.1999 US 114643 P; 07.01.1999 US 115015 P; 28.06.1999 US 340916
(43) Date of publication of application: 10.10.2001
(73) Proprietor: Thomson Licensing S.A., 92648 Boulogne Cedex (FR)
(72) Inventor: SCHULTZ, David, Evan, Indianapolis, IN 46250-1167 (US); PUGEL, Michael, Anthony, Noblesville, IN 46060-9383 (US)
(74) Representative: Rossmanith, Manfred, Dr.
(86) International application number: PCT/US1999/029846
(87) International publication number: WO 2000/041381

(56) References cited:
- EP-A- 0 698 985
- EP-A- 0 741 479
- DE-U- 29 812 185
- US-A- 5 410 326
- US-A- 5 550 754

## Description

### Field of the Invention

The present invention generally relates to a remote control apparatus for a television device or the like and, more particularly, to a remote control apparatus for a television device or the like having provisions incorporated in a remote control transmitter itself for displaying an image and, desirably, for producing the associated audio response corresponding to a program provided by the television device or the like.

### Background of the Invention

Modern television systems typically include remote control apparatus for controlling a television device, such as a television receiver (conventionally called a "television set" when containing a display device) or television accessory, e.g., cable converter, satellite receiver, VCR, or video disk player. Remote control apparatus comprise a transmitter of a suitable size and configuration to be hand-held and therefore portable and a receiver which is incorporated in the television device to be controlled. When keys of the remote control transmitter are operated, the remote control transmitter transmits remote control command signals to the remote control receiver to control various functions of the television device. The communication is normally one-way communication.

In recent years, television receivers have included provisions for simultaneously displaying a main image associated with a first signal source and an auxiliary image associated with a second signal source. While such dual-image provisions are usually included in television sets (i.e., receivers containing a display device), VCRs and satellite receives have sometimes also included provisions for causing a main and an auxiliary image to be displayed on the screen of a television set or display monitor. Dual-image receivers typically include first and second tuners as the first and second signal sources, but also include provisions for selecting a television accessory as a signal source. Accordingly, the first and second signal sources may be respective tuners, respective television accessories, a tuner and a television accessory or a television accessory and a tuner.

Usually, the dual-image capabilities include a "picture-in-picture" (PIP) display mode, in which a small, auxiliary image is inset within the main image. The dual-image capabilities may also include a "picture-outside-picture" (POP) display mode, in which one or more small auxiliary images appear next to the main image, and a multi-image display mode, in which a plurality of small images appear in an array. A "side-by-side" display mode, in which images of equal size are displayed next to each other, may also be provided, especially in newer wide screen television systems having image aspect ratios greater, e.g., 16x9, than the conventional 4x3 aspect ratio.

A user can activate a dual-image, e.g., PIP, display mode by depressing a key on a on a remote control transmitter. The user can also change the channel selected by each of the first and second tuners associated with main and auxiliary images and can exchange (swap) the signal sources for the main and auxiliary images by depressing various keys on the remote control transmitter.

While dual-image dipoles are desirable, the present inventors have recognized certain problems with them, especially with PIP displays.

The visibility of at least one of the two images is impaired by the other. In the case of a PIP display, the main image is at least partially blocked by the auxiliary image. In the case of a PIP or POP display, the reduced size of the smaller image makes it difficult to see. In addition, the smaller image has a reduced resolution compared to the main image because a given number of pixels per line and a given number of lines per image field are removed from the video signal corresponding to the smaller image to achieve the size reduction. In the case of a side-by-side display, both of the images are reduced in size. Thus, the inventors have recognized that there is a need for apparatus capable of simultaneously displaying two images without significantly adversely affecting the visibility of either.

Often, the display of the auxiliary image, usually in the PIP mode, is invoked for the purpose of scanning through channels in order to pre-view what programs are on other channels. Sometimes the channel scanning is conducted by one viewer, while another viewer is watching the main image. The programs of the other channels may not be of interest to the person the watching the main image, and the rapid changing of the auxiliary image may be very disconcerting. In addition, during the channel scanning process, an inappropriate program may be displayed to a minor. Thus, the inventors have recognized that there is a need for apparatus capable of providing a channel pre-viewing feature using an auxiliary image, without having to display the auxiliary image to all viewers.

A dual-image display system allows the program provided by a television accessory, such as a satellite receiver, to be viewed while another, main program provided by another source, such as a tuner, is being viewed without having to connect the accessory to another television set. However, the program of the accessory must be viewed in the same room and on the same screen as the main program. While this may be acceptable for relatively short periods, it is not very desirable for longer periods. Also it may be necessary for a viewer to leave the room in which a program is being viewed, causing the viewer to miss a portion of the program. Thus, the inventors have recognized that there is a need for a portable system which allows a program provided by a television device to be viewed at a location remote from the location in which the television device is located.

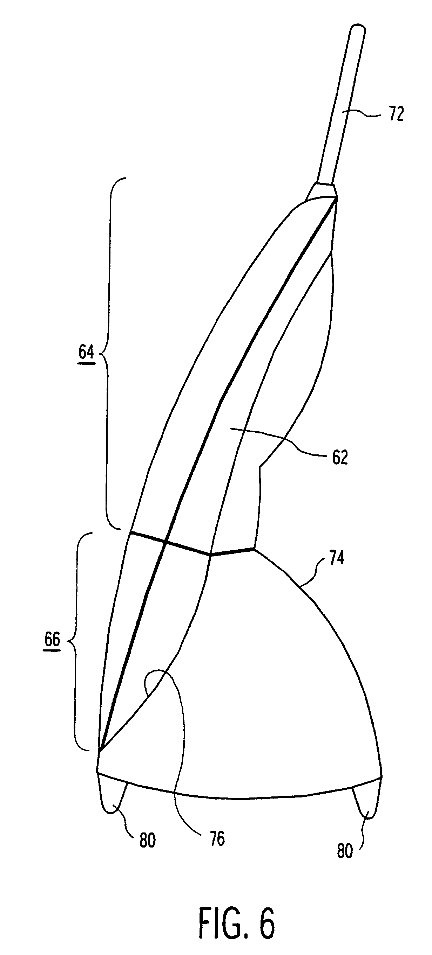

U.S. Pat. No. 5,410,326 discloses a remote control device having a display and being connected over a bi-directional link to either a cable converter or a telephone interface for receiving programming information. The remote control device can display icons of functions to be selected as well as advertisements initiated from the head end system (see Fig. 6, col. 11, lines 15-40). However, this system does not provide for viewing a program provided by a television device, which program includes moving video images, using a remote control device at a location remote from the location in which the television device is located. This system also does not provide for a channel pre-viewing feature using an auxiliary image, without having to display the auxiliary image to all viewers.

### Summary Of The Invention

In view of the problems and needs discussed above, the inventors have devised an apparatus for displaying an image corresponding to a video signal provided by a television device or the like on a display screen incorporated in a remote control transmitter of a remote control apparatus for controlling the television device or the like.

In a preferred but exemplary embodiment of the invention, the video signal is an auxiliary video signal corresponding to an auxiliary image which may be displayed on a display screen associated with the television device or the like during a dual-image, e.g., "picture-in-picture" (PIP), display mode. The video signal is modulated on a carrier and the modulated carrier is transmitted from the television device or the like to the remote control transmitter, where the video signal is recovered from the modulated carrier and used to display an auxiliary image on the display screen of the remote control transmitter during a "picture-outside-picture" (POP) display mode. Desirably, an audio signal associated with the video signal is also transmitted to the remote control transmitter where it is recovered and used to provide an audio response corresponding to the image displayed being displayed on the display screen of the remote control transmitter. It is also desirable that the carrier is an RF carrier capable of being transmitted through walls to other rooms.

These and other aspects of the present invention will become more readily apparent when reference is made to the following description taken in conjunction with the accompanying drawing.

### Brief Description Of The Drawing

In the drawing:
Figure 1 is a electrical block diagram showing a television system including a remote control apparatus constructed in accordance with an aspect of the present invention;
Figure 2 is a electrical block diagram showing a portion television system shown in Figure 1 in greater detail;
Figure 3 is a mechanical diagram showing a front view of a remote control transmitter and an associated charging base according to another aspect of the present invention;
Figure 4 is a mechanical diagram showing a side view of the remote control transmitter and the charging base shown in Figure 3;
Figure 5 is a mechanical diagram showing a front view of a remote control transmitter and the associated charging base when the remote control transmitter is inserted in the charging unit; and
Figure 6 is a mechanical diagram showing a side view of the remote control transmitter and the charging base shown in Figure 5.

In the various Figures, the same or similar elements are identified by the same or similar reference designations.

### Detailed Description Of The Drawing

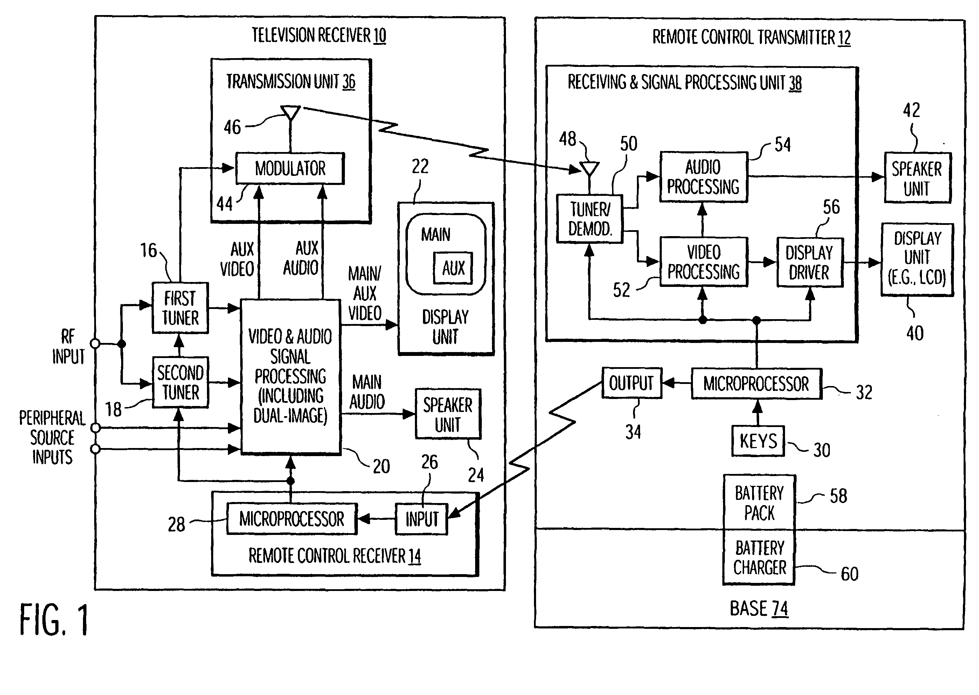

The television system shown in Figure 1 comprises a television receiver 10 and a remote control apparatus including an external remote transmitter unit 12 and a remote control receiver unit 14 included within television receiver 10, for controlling various functions of the television receiver 10 from a remote location.

Television receiver 10 includes a first tuner 16 comprising a first source of television signals. Television receiver 10 also includes a second tuner 18 comprising a second source of television signals. Tuners 16 and 18 receive RF signals from an RF input which may be connected, e.g., to a broadcast antenna (not shown) or a cable converter (not shown). Second tuner 18 allows two images comprising a main image corresponding to a channel tuned by first tuner 16 and an auxiliary image corresponding to a channel tuned by second tuner 18, to be displayed simultaneously. The dual image display may comprise a picture-in-picture (PIP) display in which the auxiliary image is inserted within the main image, or a picture-outside-picture (POP) display in which the auxiliary image is displayed next to the main image alone or with one or more additional auxiliary images. In addition to the RF input, television receiver 10 also has one or more other inputs for receiving television signals from a television accessory, such as a satellite receiver, VCR, or video disk player, or other peripheral signal source, such as a computer or video game. The main and auxiliary images of a dual-image display may correspond to any combination of the television signals produced by any two of the television signal sources, i.e., tuner 16 and tuner 18, either of tuners 1 6 and 18 and a peripheral signal source, or two peripheral signal sources. In addition, the signal sources for the main and auxiliary images may be exchanged or "swapped".

The television signal from a peripheral signal source may have any of a variety of signal formats. For example, the television signal may comprise a modulated RF carrier including a composite video signal including luminance, chrominance and synchronization signal components, separate or combined composite luminance (including synchronization components) and chrominance signal components, or baseband color (e.g., red, green and blue) video signals. An audio signal component (either of monaural or stereophonic type) is usually also included in the television signal, but need not be. The television signal from the peripheral signal source may also be of a digital type representing compressed television information, such as that provided by a high or extended definition television system, digital satellite receiver or a digital versatile disk (DVD) player. A peripheral signal source may be external to television receiver 10 or included within it.

In a normal or single image display mode, the television signal from a selected signal source, e.g., tuner 16, is coupled to an signal processing section 20 where it is processed to produce video and audio signals. The video signal is coupled to a display device 22, such as a picture tube, and the audio signal is coupled to a speaker 24. The deflection section associated with a picture tube, or other image scanning section associated with another type of display device, is not shown. Display device 22 and speaker 24 may be included within television receiver 10 itself, such as in the case of a "television set", or may be external to, such as in the case of a VCR or satellite receiver.

In a dual-image display mode, the television signal from a first signal source, e.g., tuner 16, is used to derive the video signal corresponding to the main image displayed by display device 22 and to derive the associated audio signal which is coupled to speaker 24, and the television signal from a second signal source, e.g., tuner 18, is used to derive the video signal corresponding to the auxiliary image. The audio signal, if any, associated with the television signal provide by the second signal source is not coupled to speaker 24 so as not to interfere with the audio response associated with the main image.

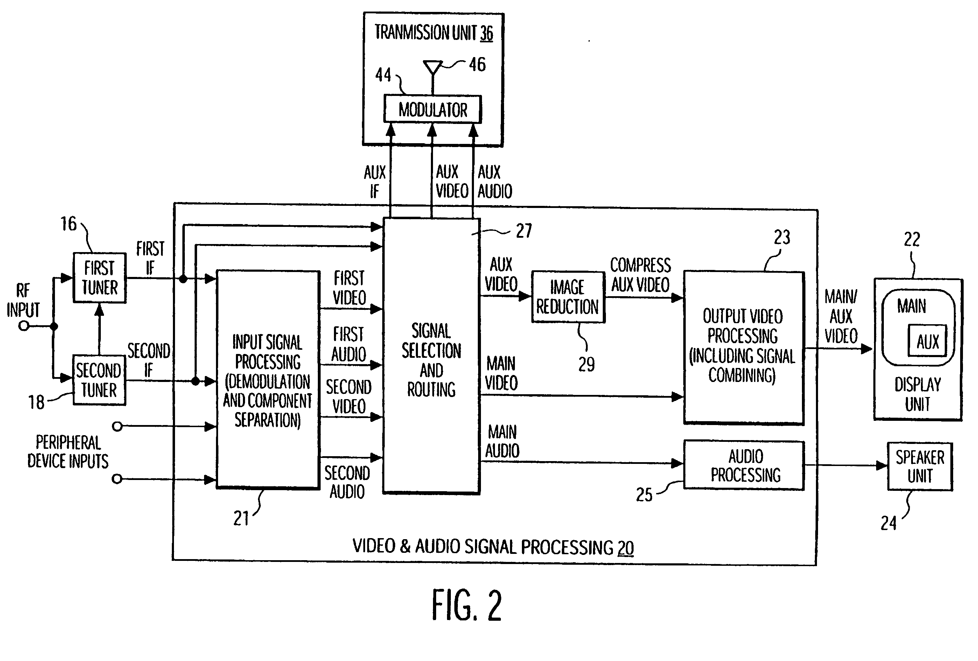

Dual-image signal processing apparatus is well known in the art and therefore need not be described in detail. However, for the sake of facilitating an understanding of certain aspects of the invention, a brief explanation of certain portions of signal processing section 20 concerned with the dual-image provisions of television receiver 10 is provided with reference to Figure 2.

Basically, as is shown in Figure 2, in addition to an input signal processing section 21, an output video processing section 23 and an output audio signal processing section 25, signal processing section 20 includes signal selection switching and routing section 27 and an image size reduction section 29 to provide the dual-image display capabilities.

Input signal processing section 21 receives the first and second television signals corresponding to the main and auxiliary images and provides respective pairs of main and auxiliary video and audio component signals. For this purpose, input signal processing section 21 includes a demodulator for the output signals of tuner 16 and 18 and other television signal component separation circuitry appropriate for television signals received from other types of signal sources. Such other signal component separation circuitry may include a luminance and chrominance signal separator for signal sources which provide a composite video signal including combined luminance and chrominance components and digital demodulation and decoding sections for signal sources which provide a digital television signal.

Signal selection and routing section 27 selects video and audio signal components of the first and second television signals corresponding to the main and auxiliary images. Signal selection and routing section 27 routes the "auxiliary" video signal corresponding to the auxiliary image to image size reduction section 29. Typically, image size reduction section 29 is a digital signal processing section including a memory and operates to remove a given number of picture elements per horizontal line and a given number of lines per image field from the auxiliary video signal in order to produce a "compressed" video signal corresponding to a reduced size image. The image reduction circuitry typically includes an analog-to-digital (A/D) converter for converting the auxiliary video signal to digital form and a digital-to-analog (D/A) converter for converting the compressed video signal in digital form back to analog form. The A/D converter is not necessary if the auxiliary video signal is already in digital form. The compressed video signal corresponding to the auxiliary image is combined with the "main" video signal corresponding to the main image in output signal processing section 23. As was indicated above, only the "main" audio signal is coupled to audio signal processing section 25.

In the arrangement shown in Figure 2, the main and auxiliary image signal components are simply identified as "video". It will be understood by those skilled in the art that various "video" signal formats are known in the art and may be employed. For example, the "video" signals may comprise composite video signals in which both luminance and chrominance components are combined, separate luminance and chrominance signals, or separate color representative signals. The main and auxiliary "audio" signals may also have various formats. For example the "audio signals may comprise a composite audio signal in which both "right" and "left" stereophonic components are combined or separate "right" and "left" stereophonic audio signals. In addition, the "video" and "audio" signals may be in analog or digital form.

As is shown in Figure 1, remote control receiver 14 included within television receiver 10 includes an input section 26 and a microprocessor 28. The remote control signals transmitted by remote control transmitter 12 comprise a carrier modulated with digitally encoded data representing remote control commands. Input section 26 converts the modulated carrier into a corresponding electrical signal and separates the digitally encoded data from it. Microprocessor 28 decodes the digitally encoded remote control commands and generates appropriate control signals for controlling the various portions of television receiver 10. Microprocessor 28 may also receive control information from user controls (not shown) mounted locally on television receiver 10 itself.

Remote control transmitter 12 includes a plurality of keys 30, a microprocessor 32 and an output section 34. A user initiates the generation of remote control commands by pressing various ones of keys 30. In response to the depression of ones of keys 30, microprocessor 32 generates digitally encoded data with which output section 34 modulates the carrier transmitted to remote control receiver 14. Among others, keys are provided for turning television receiver 10 on and off, selecting input signal sources, selecting the channels to which tuners 16 and 18 are tuned, controlling various response parameters such as the audio volume, activating dual-image display modes, selecting the signal sources for the main and auxiliary images, and swapping the signal sources for the main and auxiliary images.

In the exemplary embodiment, the remote control system is of the infrared (IR) type. However, other types, such as radio frequency (RF), may be employed. While wireless arrangements are preferred, a wired or optical fiber arrangements may also be employed.

The television system described so far is conventional and has the problems associated with the dual-image display modes set forth above. The portion of the television system remaining to be described is directed to alleviating one or more of those problems by providing a "POP (picture-outside-picture) remote" feature. More specifically, as is shown in Figure 1, television receiver 10 includes a transmitter arrangement 36 for transmitting the "auxiliary" video signal and, preferably, also the "auxiliary" audio signal associated with an auxiliary image to remote control transmitter 12 and remote control transmitter 12 includes a receiving and signal processing arrangement 38 for coupling the auxiliary video signal to a display unit 40 incorporated in remote control transmitter 12 and, preferably, also the auxiliary audio signal to a speaker unit 42. Display unit 40 preferably comprises a liquid crystal device (LCD). Speaker unit 42 may also be incorporate in remote control transmitter 12 or may be external to it. In the latter case, an audio connector ("jack") is provided for the connection of external headphones comprising speaker unit 42.

As is shown in Figure 1, transmitter unit 36 of television receiver 10 includes a modulator 44 for modulating an RF carrier with the auxiliary video and audio signals corresponding to auxiliary image and a transmitting antenna 46. Receiver unit 38 of remote control transmitter 12 includes a receiving antenna 48 and tuner/demodulator unit 50. Modulator 44 may include an amplifier for providing the signal strength necessary for reliable transmission. The carrier can have any suitable frequency allocated for wireless communications. In the United States, the Federal Communications Commission has allocated 900 MHz and 2.4 GHz for wireless communications. -Of course, other frequencies can be used depending on wireless communication regulations. It is desirable to use frequency, such as 900 MHz, which permits the transmission to penetrate walls so that a user may watch the program associated with the auxiliary video and audio signal in a different room than the one in which television receiver 10 is located. This is especially advantageous since it allows programs from a peripheral signal source, such as a satellite receiver, VCR and video disk player, connected to television receiver 10 to be viewed in rooms other than the one in which the peripheral signal source is located. With regard to the latter feature, it is desirable that the remote control apparatus be of the RF type utilizing an RF carrier for transmitting the remote control commands because it allows various functions of television receiver 10 and the peripheral signal sources, such as signal source and channel selection and audio volume adjustment, associated with the POP remote function to be controlled.

While an RF carrier is used for transmitting the auxiliary signals in the embodiment shown in Figure 1 for the reasons stated above, other carriers, such as an IR carrier may also be used. However, IR transmission requires a line of sight between the transmitting and receiving units and is therefore less desirable than RF transmission. In some cases, a wired communication channel can be used.

A variety of different modulation techniques, including newer digital techniques, may be employed. However, the same modulation technique employed for terrestrial broadcast and cable distribution according to a standard (e.g., NTSC, PAL or SECAM), utilizing an intermediate frequency (IF) carrier having video, audio and chrominance subcarriers to modulate RF carriers with video and audio information, is convenient because it allows readily available and, therefore, inexpensive components to be used in modulator 44 of transmitter unit 36 of television receiver 10 and tuner/demodulator unit 50 of receiver unit 38 of remote control transmitter 12.

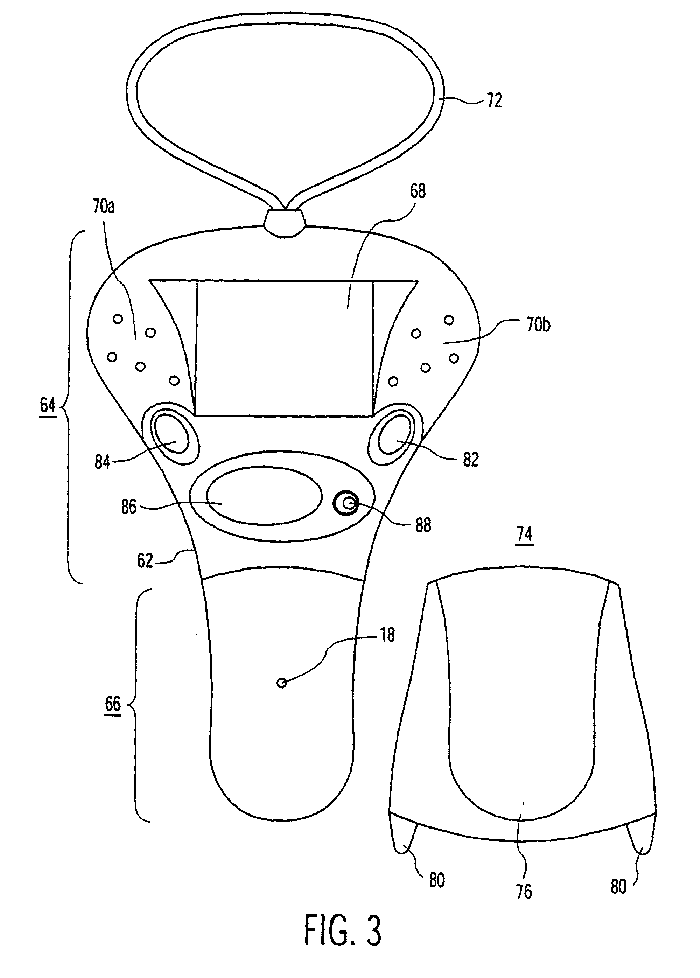

Transmitting antenna 46 and receiving antenna 48 can each comprise a variety of antenna configurations, such as monopole, dipole or loop. Each of these antenna configurations is suitable for incorporation within a carrying strap of remote control transmitter 1 2, as will be discussed with respect to Figure 3.

As is indicated in Figure 1 and shown in greater detail in Figure 2, the auxiliary video and audio signals selected by signal selection and routing section 27 of signal processing section 20 of television receiver 10 are coupled to modulator 44. The auxiliary video signal coupled to modulator 44 includes horizontal and vertical synchronization components in order to synchronize auxiliary image displayed by display device 40 of remote control transmitter 12. The auxiliary audio signal may comprise stereophonic components or, for the sake of economy, only the monaural components. Signal selector and routing unit 27 may be controlled so that the auxiliary image is displayed by display device 40 of remote control transmitter 12 while it is also being displayed by display device 22 of television receiver 10, or so that the auxiliary image is only displayed by display device 40 of remote control transmitter 12.

It will be noted that with the arrangement shown in Figure 2, auxiliary video signal available prior to image reduction unit 29 is coupled to modulator 44 for transmission. Accordingly, the image displayed by display device 40 of remote control transmitter 12 will occupy an entire screen of display device 40 and have improved resolution compared with an auxiliary image displayed by display device 22 of the television receiver 10. However, it may be desirable to transmit the auxiliary video signal available from image reduction unit 29 in order to reduce the transmission bandwidth, e.g., when the auxiliary image corresponds to a high definition or enhanced television signal.

When the signal source for the auxiliary video and audio signals is one of tuners 16 and 18, a modulated IF carrier for modulating the transmitted RF carrier is already available from selected one of tuners 16 and 18. Therefore, as is indicated in Figure 2, the IF output signal of the selected one of tuners 16 and 18 may be coupled to modulator 44 by signals selection and routing section 27 to be used in place of the auxiliary video and audio signals. In that case, since one demodulation process will be eliminated, the quality of the video and audio responses produced by remote control transmitter 12 may significantly improved.

Tuner/demodulator 50 of remote control transmitter 12 demodulates the modulated carrier received from transmission unit 36 of television receiver 10 to reproduce the auxiliary video and audio signals. Tuner/demodulator 50 can be of relatively simple construction compared to a conventional ("all channel") tuner since it only has to tune a carrier having a single frequency. However, it may be desirable for modulator 44 of television receiver 10 and tuner/demodulator 50 of remote control transmitter to be capable of generating and tuning, respectively, carriers having two or more frequencies so that different carrier frequencies can be selected to accommodate different environments, e.g., to avoid interference or to permit a second POP remote transmitter to be employed.

The video and audio output signals of tuner/demodulator 50 are coupled to respective ones of a video signal processing section 52 and an audio signal processing section 54. Video signal processing section 52 processes the auxiliary video signal to produce color representative signals, e.g., red, green and blue, and to control various image properties, such as brightness, contrast, and color saturation and tint. It also derives display timing signals from the horizontal and vertical synchronization components of the auxiliary video. The color representative signals and the display timing signals are coupled to display driver 56 which controls the display device 40 to reproduce the auxiliary image displayed on the screen of display device 40. Audio signal processing section 54 process the auxiliary audio signal to control the volume of audio response reproduced by speaker unit 42. It also. will contain stereophonic signal demodulation and processing sections, if stereophonic audio reproduction is desired.

Operating power for remote control transmitter 12 is provided by a battery pack 58 containing one or more batteries. Preferably, battery pack 58 is of the rechargeable type because of the increased power requirements associated with the reproduction of the auxiliary image and associated audio response. A battery charging unit 60 may be advantageously included in a base for supporting remote control transmitter 12 for convenient viewing, as is indicated in Figures 3-6.

In addition to controlling the normal remote control functions of remote control transmitter 12, microprocessor 32 also controls the display of the auxiliary image and the associated audio response. Microprocessor 32 initiates a "remote POP" operation in which of the auxiliary image is displayed by display device 40 by activating (e.g., by causing power to be supplied to) tuner/demodulator 50, video processing section 52, display driver 52 and display 40 in response to the depression of a "POP" key on keyboard 30. It may not be desirable to have transmitting unit 36 of television receiver 10 activated at times other than during the remote POP operation. Accordingly, it may be desirable for a "remote POP" command signal to be transmitted to television receiver 10 via the remote control channel to enable the operation of transmission unit 36 when the POP key is depressed. Although, the reproduction of the audio response associated with the auxiliary image may be enabled at the same time the auxiliary image is displayed, it may be desirable to provide for the audio response to be selectively (individually) enabled in response to the depression of an associated one of keys 30. On the other hand, it may be desirable to provide only the auxiliary audio without the auxiliary image. The latter feature is desirable when a user wishes to watch a program on the screen of display unit 22 of television 10 while the audio response produced by speaker unit 24 of television receiver 10 is muted so as not to disturb others, e.g., late at night.

Various parameters of the auxiliary image displayed by display device 40 (e.g., brightness, contrast, color saturation and tint) and the associated audio response reproduced by speaker unit 42 (e.g., volume, muting, and, in the case of stereophonic reproduction, balance) may be controlled with one or more of various keys 30. Such keys may be in addition to those provided for controlling television receiver 10. However, in order to reduce the number of keys, keys normally associated with controlling television receiver 10 may also be used to control some parameters of the auxiliary image and the associated audio response. In that case, the functions of the shared keys may be selected by the operation of mode switch. For example, channel "up" and "down" keys may be used to control the selection of channels by both of tuners 16 and 18. Similarly, volume "up" and "down" keys may be used to control the volume of both the audio response reproduced by speaker unit 24 of television receiver 10 and the audio response reproduced by speaker unit 42 of remote control transmitter 12. In like manner, a volume "muting" key can be used to mute both the audio response reproduced by speaker unit 24 of television receiver 10 and the audio response reproduced by speaker unit 42 of remote control transmitter 12.

While remote control transmitter 12 may contain keys for controlling all or most of the functions of television receiver 10, remote control transmitter 12 may also be simplified to control primarily those functions of television receiver 10 associated with the POP remote function. This may be advantageous considering the increase in size weight associated with the addition of display unit 40 and speaker unit 42 (if speakers are provided within remote control transmitter 12). In the latter case, it is desirable to provide another, "full feature" remote control transmitter for controlling the other functions of television receiver 10. The "full feature" remote control transmitter permits the simplified POP remote control transmitter to be taken to another location while still allowing the remote control of television receiver 10.

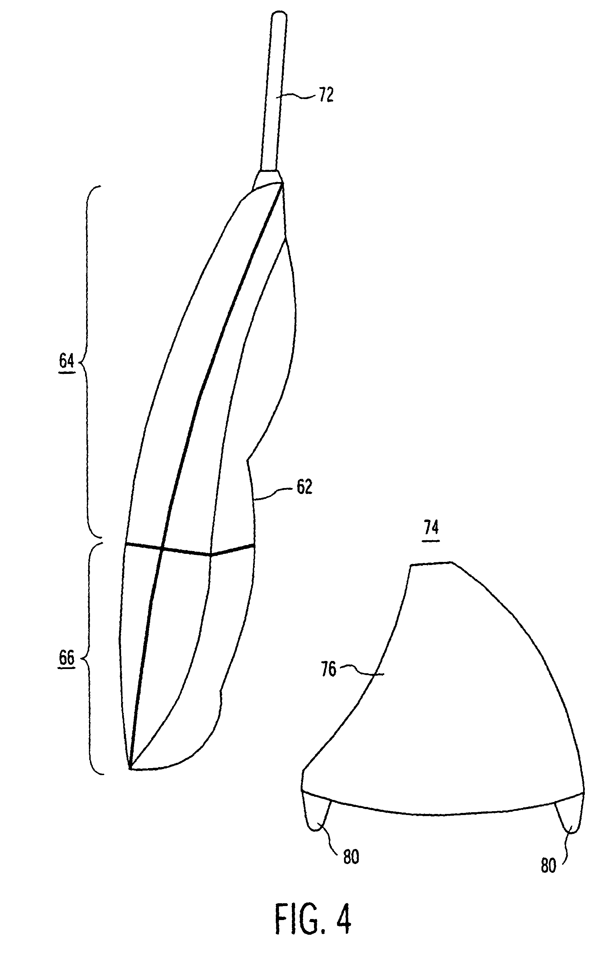

The embodiment shown in Figures 3 and 4 is a simplified "POP" remote control transmitter, which may be employed as remote control transmitter 12 in the television system shown in .Figure 1. As is shown in Figures 3 and 4, remote control unit 12 has a body 62 with an enlarged, upper portion 64 and a narrower, lower portion 66.

Enlarged, upper portion 64 accommodates an LCD display unit having a screen 68 in a central portion and left and right speakers in respective sections 70a and 70b. A pliable wrist strap 72 attached to the top of upper portion 64 provides a convenient way of carrying the remote control transmitter and preferably includes the receiving antenna for the remote control unit embedded within it. While other carrying devices, such as a handle, may be provided, they will also desirably include the receiving antenna.

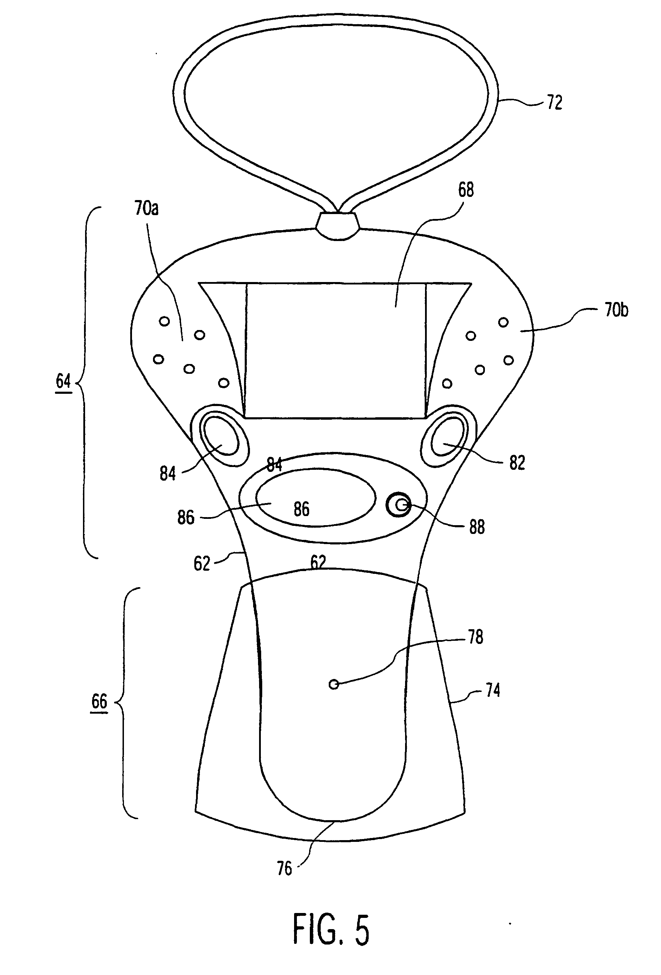

Narrower, lower portion 66 houses a rechargeable battery pack (not shown) containing one or more batteries. A base 74 contains a battery charger (not shown) for charging the rechargeable battery pack of remote control unit 12 and includes a receptacle 76 adapted to receive and snugly secure lower portion 66 of the remote control transmitter. Contacts (not shown) for electrically connecting the battery pack of the remote control transmitter to the charger within base 74 are included within receptacle 76. Preferably, the remote control transmitter includes a conventional battery monitoring circuit (not shown) which monitors the battery voltage and an indicator, such as a light emitting diode (LED) 78, for indicating when the battery voltage has dropped below a predetermined threshold and the battery pack needs recharging. Base 74 has legs 80 or is otherwise adapted to form a stand so that when lower portion 66 is within receptacle 76, the remote control transmitter is supported in a position to allow users to conveniently view a program, as is shown in Figures 5 and 6. Lower portion 66 is ergonomically shaped and of a suitable material, such as molded rubber, to provide a convenient way of holding the remote control transmitter when it is not being supported by base 74.

In the exemplary embodiment shown in Figure 3, three keys 82, 84 and 86, located near screen 68 on respective raised bezels, are provided to control the functions of the remote control transmitter associated with the POP remote feature. Keys 82 and 84 are used to change channels and control the audio volume, respectively, and key 86 is used to select which of the main or auxiliary programs keys 82 and 84 control. In the embodiment shown in Figure 3, keys 82 and 84 are so-called "rocker" type keys. Depressing an upper portion of each key corresponds to an increase in the respective function, i.e., increasing the channel number or increasing the volume, and depressing a lower portion corresponds to a decrease in the respective function, i.e., decreasing the channel number or decreasing the volume. Normally, keys 82 and 84 are used to control the channel and volume, respectively, of the main program. Depressing key 86 initiates the POP operation and causes the auxiliary image to be displayed on screen 68 and the associated audio response to be reproduced by the speakers within speaker portions 70a and 70b, in the manner described above with respect to Figures 1 and 2. In addition, depressing key 86 enables keys 82 and 84 to be used to control the channel and volume of the auxiliary program. An indicator, such as an LED 88, is provided to indicate the control mode (i.e., main or auxiliary) selected by the operation of key 86.

The three key arrangement shown in Figure 3 is very simple, but has relatively limited control capabilities. The control capabilities can be enhanced by modifications and additions. For example, key 86 may be used to exchange or "swap" the main and auxiliary programs (in which case indicator 88 may be used to indicate the "swap") and another key may be provided to initiate the POP operation. Further, while the three key embodiment limits the sources of the main and auxiliary programs to respective tuners, an additional key or keys may be provided to select other signal sources, and still other keys can be provided to control these sources. Still further, additional keys may be provided to control various image and audio response parameters of the main and auxiliary programs as was discussed above.

Thus, what has been described with respect to the exemplary embodiments shown in Figures 1-6 is an advantageous system in which a video signal and/or and an audio signal associated with a selected signal source is coupled, e.g., transmitted, to a remote control transmitter for reproduction. The exemplary embodiments provide a convenient way of providing two images simultaneously. The two images can be can be associated with different signal sources or with the same signal source. Both images can be displayed simultaneously without reduction of the visibility of either. Moreover, the auxiliary image displayed on the remote control transmitter has significantly increased size at the viewing distance and greater resolution compared with an auxiliary image displayed by a conventional dual-image system. The exemplary embodiments also provide an advantageous program pre-viewing feature which allows for privacy and does not involve disturbing other viewers. Furthermore, when the transmission is via an RF signal, the remote control transmitter can be carried to another room, e.g., to permit private viewing (and listening). The latter feature is particularly advantageous where the auxiliary image and the associated audio response correspond to a signal source such as a VCR, video disk player, DVD player, satellite receiver, cable converter, computer, video game or other peripheral signal source connected to or incorporated within the television receiver. It also allows a user to leave the room in which the television receiver is located and still continue viewing a program.

While the foregoing exemplary embodiments provide numerous advantages, it should be understood that the invention is not limited in this regard and that systems providing only one or some of the advantageous fall within the spirit and scope of the present invention defined by one or more of the following claims.

It is to be understood that the embodiments and various modifications which have been shown and described are for illustration only. While various modifications to the exemplary embodiments have been described, still others are possible. For example, while the POP remote feature has been described with respect to a television receiver having display device and a tuner, it is also applicable to other video devices which provide at least one video signal, whether or not they contain a display device and whether or not they contain a tuner. Examples of such video devices include cable converters, satellite receivers, VCRs, video disk players, computers, video games and display monitors.

## Claims

1. A video system, comprising:
a television receiver (10) including
means (20) for providing at least one video signal,
a remote control receiver (14) for receiving remote control signals and for controlling functions of said television receiver in response to said remote control signals, and
means (36) for coupling said video signal to a remote electronic device; and
a remote control device (12) for generating and transmitting said remote control signals for controlling various functions of said television receiver, said remote control transmitter including means (48, 50) for receiving said video signal transmitted from said television receiver and for displaying (40) an image represented by said video signal, **characterized in that**
said video signal represents moving video images and said receiving and displaying means of said remote control device displays said moving video images in response to said video signal.

2. The video system recited in claim 1, **characterized in that**
said coupling means (36) includes a transmitter unit (44, 46) for modulating a carrier in accordance with said video signal and transmitting said modulated carrier to said remote control device, and
said remote control device includes a receiver unit (48, 50) for demodulating said modulated carrier to recover said video signal.

3. The video system recited in claim 2, **characterized in that** said carrier is an RF carrier.

4. The video system recited in claim 3, **characterized in that** said remote control signals are modulated on a second RF carrier.

5. The video system recited in claim 1, **characterized in that**
said means (20) for providing at least one video signal provides main and auxiliary video signals corresponding to respective ones of a main image and an auxiliary image, the auxiliary video image being a moving image; and
said coupling means (36) couples said auxiliary video signal to said remote control device for displaying said auxiliary video image.

6. The video system recited in claim 5, **characterized in that**
said television receiver (10) includes a display (22) for displaying both said main image and said auxiliary image at the same time during a dual image display mode.

7. The video system recited in claim 1, **characterized in that**
said television receiver (10) further includes means (20) for providing an audio signal associated with said video signal,
said coupling means (36) couples said audio signal to said remote control device, and
said remote control device further includes means (42) for producing an audio output in response to said audio signal.

8. The video system recited in claim 7, **characterized in that**
said coupling means (36) includes a transmitter unit (44, 46) for modulating a carrier in accordance with said video and audio signals and for transmitting said modulated carrier to said remote control device; and
said remote control device includes a receiver unit (48, 50) for demodulating said modulated carrier to recover said video and audio signals.

9. The video system recited in claim 7, **characterized in that**
television receiver said means for producing an audio response corresponding to said audio signal received from said television receiver comprises means for coupling said audio signal to at least one speaker external to said remote control device.

10. A remote control device for controlling a television receiver (10), said television receiver including means (20) for providing a video signal, a remote control receiver (14) for receiving remote control signals and controlling functions of said television receiver in response to said remote control signals, and means (36) for coupling said video signal to a remote device, said remote control device comprising:
keys (30);
means (32, 34) for generating remote control commands and transmitting said remote control commands to said television receiver in response to the activation of ones of said keys by a user;
a video display (40);
means (48, 50) for receiving said video signal from said television receiver and causing said display to provide a video image in response to said video signal, **characterized in that**
said video signal represents moving video images, whereby said video display provides said moving video images in response to said video signal.

11. The remote control device recited in claim 10, further **characterized by**
a speaker (42) for producing an audio output, wherein said receiving means (48, 50) receives an audio signal associated with said video signal and causes said speaker to provide an associated audio output in response to said audio signal.

12. The remote control device recited in claim 11, **characterized in that**
said means for receiving said video and audio signals includes a receiving antenna (48) for receiving a RF carrier modulated in accordance with said video and audio signals and a demodulator (50) for recovering said video and audio signals from said modulated carrier.

13. The remote control device recited in claim 12, **characterized in that**
said antenna (48) is included within a carrying device attached to said remote control device.

14. The remote control device recited in claim 10, **characterized in that**
said television receiver (10) includes means (20) for providing a main video signal and an auxiliary video signal representing an image and an auxiliary moving image, said coupling means transmitting said auxiliary video signal, wherein said display of said remote control device displays said auxiliary moving image in response to receipt of said auxiliary video signal.

15. A television receiver (10) adapted to be controlled by remote control signals from a remote control device (12), the remote control device including a video display (40) and means (48, 50) for receiving a video signal and causing said video display to provide a video image in response to said video signal, the television receiver (10) comprising:
means (20) for providing said video signal;
a remote control receiver (14) for receiving said remote control signals and for controlling said functions of said television receiver (10) in response to said remote control signals;
a transmitter unit (36) for modulating a carrier in accordance with said video signal and transmitting said modulated carrier to said remote control device **characterized in that**
said video signal represents moving video images, whereby said display of said remote control device is caused to display said moving video images in response to said video signal.

16. The television receiver (10) recited in claim 15, **characterized in that**
said providing means (20) provides an audio signal associated with said video signal, and said transmitter (36) unit modulates said carrier in accordance with said video and audio signals and transmits said modulated carrier to said remote control device (12), whereby said remote control device produces an audio output associated with said moving video images.

17. The television receiver (10) recited in claim 15, **characterized in that**
said video signal comprises one of a main video signal and an auxiliary video signal associated with a main moving video image and an auxiliary moving video image, respectively, said main moving video image and said auxiliary moving video image being displayed at the same time on a display (22) during a dual display mode, and said transmitter unit (44) modulates said carrier in accordance with said auxiliary video signal and transmits said modulated carrier, wherein said main moving video image is displayed on said display (22) and said auxiliary moving image is displayed on said display (40) of said remote control device.

18. The television receiver (10) recited in claim 17, **characterized in that** an auxiliary audio signal is associated with said auxiliary video signal, and said transmitter unit (44) modulates said carrier in accordance with said auxiliary video and audio signals and transmits said modulated carrier, wherein said remote control device (12) provides an associated audio output along with said auxiliary moving video image.

19. The television receiver (10) recited in claim 18, **characterized in that** said carrier is an RF carrier and is modulated in accordance with said auxiliary video and audio signals in accordance with a terrestrial television broadcast standard.

## Patentansprüche

1. Videosystem, umfassend:
einen Fernsehempfänger (10), der folgendes enthält:
ein Mittel (20) zum Bereitstellen mindestens eines Videosignals,
einen Fernbedienungsempfänger (14) zum Empfangen von Fernbedienungssignalen und zum Steuern von Funktionen des Fernsehempfängers als Reaktion auf die Fernbedienungssignale und
ein Mittel (36) zum Ankoppeln des Videosignals an ein abgesetztes elektronisches Gerät; und
ein Fernbedienungsgerät (12) zum Erzeugen und Senden der Fernbedienungssignale zur Steuerung verschiedener Funktionen des Fernsehempfängers, wobei der Fernbedienungssender ein Mittel (48, 50) zum Empfangen des von dem Fernsehempfänger gesendeten Videosignals und zum Anzeigen (40) eines durch das Videosignal repräsentierten Bildes enthält, **dadurch gekennzeichnet, daß**
das Videosignal bewegliche Videobilder repräsentiert und das Empfangs- und Anzeigemittel des Fernbedienungsgeräts die beweglichen Videobilder als Reaktion auf das Videosignal anzeigt.

2. Videosystem nach Anspruch 1, **dadurch gekennzeichnet, daß**
das Koppelmittel (36) eine Sendeeinheit (44, 46) zum Modulieren eines Trägers gemäß dem Videosignal und zum Senden des modulierten Trägers zu dem Fernbedienungsgerät enthält und
das Fernbedienungsgerät eine Empfängereinheit (48, 50) zum Demodulieren des modulierten Trägers, um das Videosignal wiederherzustellen, enthält.

3. Videosystem nach Anspruch 2, **dadurch gekennzeichnet, daß** der Träger ein HF-Träger ist.

4. Videosystem nach Anspruch 3, **dadurch gekennzeichnet, daß** die Fernbedienungssignale auf einen zweiten HF-Träger aufmoduliert werden.

5. Videosystem nach Anspruch 1, **dadurch gekennzeichnet, daß**
das Mittel (20) zum Bereitstellen mindestens eines Videosignals ein Haupt- und ein Hilfsvideosignal bereitstellt, das jeweils einzelnen eines Hauptbildes und eines Hilfsbildes entspricht, wobei das Hilfsvideobild ein bewegliches Bild ist; und
das Koppelmittel (36) das Hilfsvideosignal zum Anzeigen des Hilfsvideobildes an das Fernbedienungsgerät ankoppelt.

6. Videosystem nach Anspruch 5, **dadurch gekennzeichnet, daß**
der Fernsehempfänger (10) eine Anzeige (22) zum Anzeigen sowohl des Hauptbildes als auch des Hilfsbildes zur selben Zeit während eines Zweifachanzeigemodus enthält.

7. Videosystem nach Anspruch 1, **dadurch gekennzeichnet, daß**
der Fernsehempfänger (10) ferner ein Mittel (20) zum Bereitstellen eines mit dem Videosignal assoziierten Audiosignals enthält,
das Koppelmittel (36) das Audiosignal an das Fernbedienungsgerät ankoppelt und
das Fernbedienungsgerät ferner ein Mittel (42) zum Erzeugen einer Audioausgabe als Reaktion auf das Audiosignal enthält.

8. Videosystem nach Anspruch 7, **dadurch gekennzeichnet, daß**
das Koppelmittel (36) eine Sendeeinheit (44, 46) zum Modulieren eines Trägers gemäß den Video- und Audiosignalen und zum Senden des modulierten Trägers zu dem Fernbedienungsgerät enthält; und
das Fernbedienungsgerät eine Empfängereinheit (48, 50) zum Demodulieren des modulierten Trägers, um die Video- und Audiosignale wiederherzustellen, enthält.

9. Videosystem nach Anspruch 7, **dadurch gekennzeichnet, daß**
das Mittel zum Erzeugen einer dem aus dem Fernsehempfänger empfangenen Audiosignal entsprechenden Audioantwort ein Mittel zum Ankoppeln des Audiosignals an mindestens einen außerhalb des Fernbedienungsgeräts angeordneten Lautsprecher enthält.

10. Fernbedienungsgerät zur Steuerung eines Fernsehempfängers (10), wobei der Fernsehempfänger ein Mittel (20) zum Bereitstellen eines Videosignals, einen Fernbedienungsempfänger (14) zum Empfangen von Fernbedienungssignalen und zum Steuern von Funktionen des Fernsehempfängers als Reaktion auf die Fernbedienungssignale und ein Mittel (36) zum Ankoppeln des Videosignals an ein Fernbedienungsgerät enthält, wobei das Fernbedienungsgerät folgendes umfaßt:
Tasten (30);
ein Mittel (32, 34) zum Erzeugen von Fernbedienungsbefehlen und zum Senden der Fernbedienungsbefehle zu dem Fernsehempfänger als Reaktion auf die Aktivierung einzelner der Tasten durch einen Benutzer; eine Videoanzeige (40);
ein Mittel (48, 50) zum Empfangen des Videosignals von dem Fernsehempfänger und zum Bewirken, daß die Anzeige als Reaktion auf das Videosignal ein Videobild bereitstellt, **dadurch gekennzeichnet, daß**
das Videosignal bewegliche Videobilder repräsentiert, wodurch die Videoanzeige die beweglichen Videobilder als Reaktion auf das Videosignal bereitstellt.

11. Fernbedienungsgerät nach Anspruch 10, weiterhin **gekennzeichnet durch**
einen Lautsprecher (42) zum Erzeugen einer Audioausgabe, wobei das Empfangsmittel (48, 50) ein mit dem Videosignal assoziiertes Audiosignal empfängt und bewirkt, daß der Lautsprecher als Reaktion auf das Audiosignal eine assoziierte Audioausgabe bereitstellt.

12. Fernbedienungsgerät nach Anspruch 11, **dadurch gekennzeichnet, daß**
das Mittel zum Empfangen der Video- und Audiosignale eine Empfangsantenne (48) zum Empfangen eines gemäß den Video- und Audiosignalen modulierten HF-Trägers und einen Demodulator (50) zum Wiederherstellen der Video- und Audiosignale aus dem modulierten Träger enthält.

13. Fernbedienungsgerät nach Anspruch 12, **dadurch gekennzeichnet, daß**
die Antenne (48) in einer an dem Fernbedienungsgerät angebrachten Tragevorrichtung enthalten ist.

14. Fernbedienungsgerät nach Anspruch 10, **dadurch gekennzeichnet, daß**
der Fernsehempfänger (10) ein Mittel (20) zum Bereitstellen eines Hauptvideosignals und eines Hilfsvideosignals enthält, die ein Bild und ein bewegliches Hilfsbild repräsentieren, wobei das Koppelmittel das Hilfsvideosignal sendet, wobei die Anzeige des Fernbedienungsgeräts das bewegliche Hilfsbild als Reaktion auf den Empfang des Hilfsvideosignals anzeigt.

15. Fernsehempfänger (10), der so ausgelegt ist, daß er durch Fernbedienungssignale von einem Fernbedienungsgerät (12) gesteuert wird, wobei das Fernbedienungsgerät eine Videoanzeige (40) und ein Mittel (48, 50) zum Empfangen eines Videosignals und zum Bewirken, daß die Videoanzeige als Reaktion auf das Videosignal ein Videobild bereitstellt, enthält, wobei der Fernsehempfänger (10) folgendes umfaßt:
ein Mittel (20) zum Bereitstellen des Videosignals; einen Fernbedienungsempfänger (14) zum Empfangen der Fernbedienungssignale und zum Steuern der Funktionen des Fernsehempfängers (10) als Reaktion auf die Fernbedienungssignale;
eine Sendereinheit (36) zum Modulieren eines Trägers gemäß dem Videosignal und zum Senden des modulierten Trägers zu dem Fernbedienungsgerät, **dadurch gekennzeichnet, daß**
das Videosignal bewegliche Videobilder repräsentiert, wodurch bewirkt wird, daß die Anzeige des Fernbedienungsgeräts als Reaktion auf das Videosignal die beweglichen Videobilder anzeigt.

16. Fernsehempfänger (10) nach Anspruch 15, **dadurch gekennzeichnet, daß**
das Bereitstellungsmittel (20) ein mit dem Videosignal assoziiertes Audiosignal bereitstellt und die Sendereinheit (36) den Träger gemäß den Video- und Audiosignalen moduliert und den modulierten Träger zu dem Fernbedienungsgerät (12) sendet, wodurch das Fernbedienungsgerät eine mit den beweglichen Videobildern assoziierte Audioausgabe erzeugt.

17. Fernsehempfänger (10) nach Anspruch 15, **dadurch gekennzeichnet, daß**
das Videosignal ein Hauptvideosignal oder ein Hilfsvideosignal, das mit einem beweglichen Hauptvideobild bzw. einem beweglichen Hilfsvideobild assoziiert ist, umfaßt, wobei das bewegliche Hauptvideobild und das bewegliche Hilfsvideobild während eines Zweifachanzeigemodus gleichzeitig auf einer Anzeige (22) angezeigt werden und die Sendeeinheit (44) den Träger gemäß dem Hilfsvideosignal moduliert und den modulierten Träger sendet, wobei das bewegliche Hauptvideobild auf der Anzeige (22) angezeigt wird und das bewegliche Hilfsbild auf der Anzeige (40) des Fernbedienungsgeräts angezeigt wird.

18. Fernsehempfänger (10) nach Anspruch 17, **dadurch gekennzeichnet, daß** mit dem Hilfsvideosignal ein Hilfsaudiosignal assoziiert ist und die Sendeeinheit (44) den Träger gemäß dem Hilfsvideo- und -audiosignal moduliert und den modulierten Träger sendet, wobei das Fernbedienungsgerät (12) zusammen mit dem beweglichen Hilfsvideobild eine assoziierte Audioausgabe bereitstellt.

19. Fernsehempfänger (10) nach Anspruch 18, **dadurch gekennzeichnet, daß** der Träger ein HF-Träger ist und gemäß dem Hilfsvideo- und -audiosignal gemäß einem terrestrischen Fernsehrundfunkstandard moduliert wird.

## Revendications

1. Système vidéo comprenant :
un récepteur de télévision (10) incluant
des moyens (20) pour fournir au moins un signal vidéo,
un récepteur de télécommande (14) pour recevoir des' signaux de télécommande et pour commander des fonctions dudit récepteur de télévision en réponse auxdits signaux de télécommande et
des moyens (36) pour coupler ledit signal vidéo à un dispositif électronique distant ; et
un dispositif de télécommande (12) pour générer et transmettre lesdits signaux de télécommande pour commander diverses fonctions dudit récepteur de télévision, ledit émetteur de télécommande incluant des moyens (48, 50) pour recevoir ledit signal vidéo transmis à partir dudit récepteur de télévision et pour afficher (40) une image représentée par ledit signal vidéo, **caractérisé en ce que**
ledit signal vidéo représente des images vidéo en mouvement et lesdits moyens de réception et d'affichage dudit dispositif de télécommande affichent lesdites images vidéo en mouvement en réponse audit signal vidéo.

2. Système vidéo présenté dans la revendication 1, **caractérisé en ce que**
lesdits moyens de couplage (36) incluent une unité d'émetteur (44, 46) pour moduler une porteuse conformément audit signal vidéo et transmettre ladite porteuse modulée audit dispositif de télécommande, et
ledit dispositif de télécommande inclut une unité de récepteur (48, 50) pour démoduler ladite porteuse modulée pour récupérer ledit signal vidéo.

3. Système vidéo présenté dans la revendication 2, **caractérisé en ce que** ladite porteuse est une porteuse RF.

4. Système vidéo présenté dans la revendication 3, **caractérisé en ce que** lesdits signaux de télécommande sont modulés sur une deuxième porteuse RF.

5. Système vidéo présenté dans la revendication 1, **caractérisé en ce que**
lesdits moyens (20) pour fournir au moins un signal vidéo fournissent des signaux vidéo principal et auxiliaire correspondant à une image principale et une image auxiliaire respective, l'image vidéo auxiliaire étant une image en mouvement ; et
lesdits moyens de couplage (36) couplent ledit signal vidéo auxiliaire audit dispositif de télécommande pour afficher ladite image vidéo auxiliaire.

6. Système vidéo présenté dans la revendication 5, **caractérisé en ce que**
ledit récepteur de télévision (10) inclut un écran (22) pour afficher simultanément ladite image principale et ladite image auxiliaire en mode d'affichage double image.

7. Système vidéo présenté dans la revendication 1, **caractérisé en ce que**
ledit récepteur de télévision (10) inclut en outre des moyens (20) pour fournir un signal audio associé audit signal vidéo,
lesdits moyens de couplage (36) couplent ledit signal audio audit dispositif de télécommande, et
ledit dispositif de télécommande inclut en outre des moyens (42) pour produire une sortie audio en réponse audit signal audio.

8. Système vidéo présenté dans la revendication 7, **caractérisé en ce que**
lesdits moyens de couplage (36) incluent une unité d'émetteur (44, 46) pour moduler une porteuse conformément auxdits signaux vidéo et audio et pour transmettre ladite porteuse modulée audit dispositif de télécommande ; et
ledit dispositif de télécommande inclut une unité de récepteur (48, 50) pour démoduler ladite porteuse modulée pour récupérer lesdits signaux vidéo et audio.

9. Système vidéo présenté dans la revendication 7, **caractérisé en ce que**
lesdits moyens pour produire une réponse audio correspondant audit signal audio reçu dudit récepteur de télévision comprennent des moyens pour coupler ledit signal audio à au moins un haut-parleur externe audit dispositif de télécommande.

10. Dispositif de télécommande pour commander un récepteur de télévision (10), ledit récepteur de télévision incluant des moyens (20) pour fournir un signal vidéo, un récepteur de télécommande (14) pour recevoir des signaux de télécommande et commander des fonctions dudit récepteur de télévision en réponse auxdits signaux de télécommande et des moyens (36) pour coupler ledit signal vidéo à un dispositif distant, ledit dispositif de télécommande comprenant :
des touches (30) ;
des moyens (32, 34) pour générer des commandes de télécommande et transmettre lesdites commandes de télécommande audit récepteur de télévision en réponse à l'activation de certaines desdites touches par un utilisateur ;
un écran vidéo (40) ;
un moyen (48, 50) pour recevoir ledit signal vidéo dudit récepteur de télévision et conduire ledit écran à fournir une image vidéo en réponse audit signal vidéo, **caractérisé en ce que**
ledit signal vidéo représente des images vidéo en mouvement, où ledit écran vidéo fournit lesdites images vidéo en mouvement en réponse audit signal vidéo.

11. Dispositif de télécommande présenté dans la revendication 10, **caractérisé en outre par**
un haut-parleur (42) pour produire une sortie audio, où lesdits moyens de réception (48, 50) reçoivent un signal audio associé audit signal vidéo et conduisent ledit haut-parleur à fournir une sortie audio associée en réponse audit signal audio.

12. Dispositif de télécommande présenté dans la revendication 11, **caractérisé en ce que**
lesdits moyens pour recevoir lesdits signaux vidéo et audio incluent une antenne de réception (48) pour recevoir une porteuse RF modulée conformément auxdits signaux vidéo et audio et un démodulateur (50) pour récupérer lesdits signaux vidéo et audio à partir de ladite porteuse modulée.

13. Dispositif de télécommande présenté dans la revendication 12, **caractérisé en ce que**
ladite antenne (48) est incluse dans un dispositif de transport fixé audit dispositif de télécommande.

14. Dispositif de télécommande présenté dans la revendication 10, **caractérisé en ce que**
ledit récepteur de télévision (10) inclut des moyens (20) pour fournir un signal vidéo principal et un signal vidéo auxiliaire représentant une image et une image en mouvement auxiliaire, lesdits moyens de couplage transmettant ledit signal vidéo auxiliaire, où ledit écran dudit dispositif de télécommande affiche ladite image en mouvement auxiliaire en réponse à la réception dudit signal vidéo auxiliaire.

15. Récepteur de télévision adapté pour être commandé par des signaux de télécommande à partir d'un dispositif de télécommande (12), le dispositif de télécommande incluant un écran vidéo (40) et des moyens (48, 50) pour recevoir un signal vidéo et conduisant ledit écran vidéo à fournir une image vidéo en réponse audit signal vidéo, le récepteur de télévision comprenant :
des moyens (20) pour fournir ledit signal vidéo ;
un récepteur de télécommande (14) pour recevoir lesdits signaux de télécommande et pour commander lesdites fonctions dudit récepteur de télévision en réponse auxdits signaux de télécommande ;
une unité d'émetteur (36) pour moduler une porteuse conformément audit signal vidéo et pour transmettre ladite porteuse modulée audit dispositif de télécommande, **caractérisé en ce que**
ledit signal vidéo représente des images vidéo en mouvement, où ledit écran dudit dispositif de télécommande est conduit à afficher lesdites images en mouvement en réponse audit signal vidéo.

16. Récepteur de télévision présenté dans la revendication 15, **caractérisé en ce que**
lesdits moyens de fourniture (20) fournissent un signal audio associé audit signal vidéo et ladite unité d'émetteur (36) module ladite porteuse conformément auxdits signaux vidéo et audio et transmet ladite porteuse modulée audit dispositif de télécommande (12), où ledit dispositif de télécommande produit une sortie audio associée auxdites images vidéo en mouvement.

17. Récepteur de télévision présenté dans la revendication 15, **caractérisé en ce que**
ledit signal vidéo comprend un signal vidéo principal et un signal vidéo auxiliaire associés à une image vidéo en mouvement principale et une image vidéo en mouvement auxiliaire respectivement, ladite image vidéo en mouvement principale et ladite image vidéo en mouvement auxiliaire étant affichées simultanément sur un écran (22) en mode d'affichage double, et ladite unité d'émetteur (44) module ladite porteuse conformément audit signal vidéo auxiliaire et transmet ladite porteuse modulée, où ladite image vidéo en mouvement principale est affichée sur ledit écran (22) et ladite image en mouvement auxiliaire est affichée sur ledit écran (40) dudit dispositif de télécommande.

18. Récepteur de télévision présenté dans la revendication 17, **caractérisé en ce qu'**un signal audio auxiliaire est associé audit signal vidéo auxiliaire, et ladite unité d'émetteur (44) module ladite porteuse conformément auxdits signaux vidéo et audio auxiliaires et transmet ladite porteuse modulée, où ledit dispositif de télécommande (12) fournit une sortie audio associée avec ladite image vidéo en mouvement auxiliaire.

19. Récepteur de télévision présenté dans la revendication 18, **caractérisé en ce que** ladite porteuse est une porteuse RF et est modulée conformément auxdits signaux vidéo et audio auxiliaires conformément à une norme de radiodiffusion de télévision terrestre.
